# NEUE EUROPÄISCHE PATENTSCHRIFT

(11) **EP 3 042 093 B2**
(45) Veröffentlichungstag und Bekanntmachung des Hinweises auf die Entscheidung über den Einspruch: **14.10.2020**
(45) Hinweis auf die Patenterteilung: 11.10.2017
(21) Anmeldenummer: 14759093.9
(22) Anmeldetag: 12.08.2014
(51) Int. Cl.: F16D 13/58

(54) **REIBUNGSKUPPLUNGSEINRICHTUNG**
FRICTION CLUTCH DEVICE
SYSTÈME D'EMBRAYAGE À FRICTION

(30) Priorität: 06.09.2013 DE 102013217861
(43) Veröffentlichungstag der Anmeldung: 13.07.2016
(73) Patentinhaber: Schaeffler Technologies AG & Co. KG, 91074 Herzogenaurach (DE)
(72) Erfinder: REICHERT, Christophe, F-67480 Roeschwoog (FR)
(86) Internationale Anmeldenummer: PCT/DE2014/200399
(87) Internationale Veröffentlichungsnummer: WO 2015/032395

(56) Entgegenhaltungen:
- WO-A1-2013/186046
- DE-A1-102012 219 558
- DE-A1-102012 219 711
- FR-A1- 2 334 009
- FR-A1- 2 556 061
- FR-A1- 2 579 279
- GB-A- 2 296 541

## Beschreibung

Die Erfindung betrifft eine Reibungskupplungseinrichtung gemäß dem Oberbegriff des Patentanspruchs 1. Insbesondere betrifft die Erfindung eine Reibungskupplungseinrichtung für einen Antriebsstrang eines brennkraftmaschinengetriebenen Kraftfahrzeugs, aufweisend eine Drehachse, ein Gehäuse, wenigstens eine Druckplatte, wenigstens eine zu einer Betätigung zwischen einer Schließposition und einer Öffnungsposition relativ zu der Druckplatte axial verlagerbare Anpressplatte und eine Federeinrichtung mit einer ersten Feder zur Beaufschlagung der wenigstens einen Anpressplatte in Schließrichtung und einer zweiten Feder zur Kompensierung eines Betätigungskraftanstiegs.

Aus der älteren, nicht vorveröffentlichten EP 2 861 883 A1 ist eine Reibungskupplung mit einer gezogenen Kupplung bekannt zum Kuppeln einer Antriebswelle eines Kraftfahrzeugmotors mit einer Getriebeeingangswelle eines Kraftfahrzeuggetriebes, mit einer Gegenplatte zum Einleiten eines Drehmoments, einer relativ zur Gegenplatte verlagerbare Anpressplatte zum reibschlüssigen Verpressen einer Kupplungsscheibe zum Ausleiten des Drehmoments, einem mit der Gegenplatte verbundenen Kupplungsdeckel zum zumindest teilweisen Abdecken der Anpressplatte, einer schwenkbar an dem Kupplungsdeckel abgestützten Hebelfeder, insbesondere Tellerfeder, zum Verlagern der Anpressplatte und einer, insbesondere als Hebelfeder ausgestalteten, Servofeder zur Reduzierung einer zum Verlagern der Anpressplatte erforderlichen von einem Betätigungssystem aufbringbare Betätigungskraft bei einem Verschleiß, wobei die Servofeder an einem ersten Kraftrand an dem Kupplungsdeckel und an einem zweiten Kraftrand an der Hebelfeder abgestützt ist.

Aus der DE 10 2012 219 558 A1 ist eine Reibungskupplungseinrichtung bekannt, die auf den Oberbegriff des Patentanspruchs 1 lesbar ist.

Der Erfindung liegt die Aufgabe zugrunde, eine eingangs genannte Reibungskupplungseinrichtung baulich und/oder funktional zu verbessern. Insbesondere soll ein vergrößerter Bauraum für eine Dämpfereinrichtung bereitgestellt sein. Insbesondere soll radial ein vergrößerter Bauraum für eine Dämpfereinrichtung bereitgestellt sein. Insbesondere soll axial ein vergrößerter Bauraum für eine Dämpfereinrichtung bereitgestellt sein. Insbesondere soll ein Wirkungsgrad erhöht sein. Insbesondere soll ein Kontaktverschleiß an einer Feder und/oder an einem Drahtring kompensierbar sein. Insbesondere soll eine Zentrierung vereinfacht sein. Insbesondere soll eine Herstellbarkeit vereinfacht sein. Insbesondere soll ein Aufwand reduziert sein.

Die Lösung der Aufgabe erfolgt erfindungsgemäß durch eine Reibungskupplungseinrichtung gemäß Patentanspruch 1. Bevorzugte Ausführungsbeispiele sind in den abhängigen Patentansprüchen dargelegt.

Die Reibungskupplungseinrichtung für einen Antriebsstrang eines brennkraftmaschinengetriebenen Kraftfahrzeugs weist eine Drehachse, ein Gehäuse, wenigstens eine Druckplatte, wenigstens eine zu einer Betätigung zwischen einer Schließposition und einer Öffnungsposition relativ zu der Druckplatte axial verlagerbare Anpressplatte und eine Federeinrichtung mit einer ersten Feder zur Beaufschlagung der wenigstens einen Anpressplatte in Schließrichtung und einer zweiten Feder zur Kompensierung eines Betätigungskraftanstiegs auf, bei der die wenigstens eine Anpressplatte zur Betätigung in Öffnungsrichtung gedrückt ist und sich die zweite Feder einerseits an dem Gehäuse abstützt und andererseits die erste Feder vorgespannt hält.

Der Antriebsstrang kann eine Brennkraftmaschine aufweisen. Der Antriebsstrang kann einen Drehschwingungsdämpfer aufweisen. Der Antriebsstrang kann ein Getriebe aufweisen. Der Antriebsstrang kann wenigsten ein antreibbares Rad aufweisen. Die Reibungskupplungseinrichtung kann in dem Antriebsstrang anordenbar sein. Die Reibungskupplungseinrichtung kann zwischen der Brennkraftmaschine und dem Getriebe anordenbar sein. Die Reibungskupplungseinrichtung kann zwischen dem Drehschwingungsdämpfer und dem Getriebe anordenbar sein.

Die Reibungskupplungseinrichtung kann ein Eingangsteil aufweisen. Die Reibungskupplungseinrichtung kann wenigstens ein Ausgangsteil aufweisen. Die Reibungskupplungseinrichtung kann ein Gehäuse aufweisen. Das Gehäuse kann auch als Deckel bezeichnet werden. Das Eingangsteil kann mithilfe der Brennkraftmaschine antreibbar sein. Mithilfe des wenigstens einen Ausgangsteils kann das Getriebe antreibbar sein. Die Reibungskupplungseinrichtung kann zum Anfahren sowie zum Wechseln von Getriebeübersetzungen dienen.

Die Reibungskupplungseinrichtung kann eine Einfachkupplung aufweisen. Die Reibungskupplungseinrichtung kann eine Doppelkupplung aufweisen. Die Reibungskupplungseinrichtung kann eine trockene Kupplung aufweisen. Die Reibungskupplungseinrichtung kann eine nasse Kupplung aufweisen. Die Reibungskupplungseinrichtung kann eine Einscheibenkupplung aufweisen. Die Reibungskupplungseinrichtung kann eine Mehrscheibenkupplung aufweisen. Die Reibungskupplungseinrichtung kann eine selbsttätig schließende Kupplung aufweisen. Die Reibungskupplungseinrichtung kann eine gedrückte Kupplung aufweisen. Eine gedrückte Kupplung kann eine Kupplung sein, die zur Betätigung in Öffnungsrichtung gedrückt ist. Die Reibungskupplungseinrichtung kann mithilfe eines Kupplungspedals betätigbar sein. Die Reibungskupplungseinrichtung kann automatisiert betätigbar sein.

Die Reibungskupplungseinrichtung kann ausgehend von einer vollständig geöffneten Betätigungsposition, in der zwischen dem Eingangsteil und dem Ausgangsteil im Wesentlichen keine Leistungsübertragung erfolgt, bis hin zu einer vollständig geschlossenen Betätigungsposition, in der zwischen dem Eingangsteil und dem Ausgangsteil im Wesentlichen eine vollständige Leistungsübertragung erfolgt, betätigungsabhängig eine zunehmende mechanische Leistungsübertragung ermöglichen, wobei eine Leistungsübertragung zwischen dem Eingangsteil und dem Ausgangsteil reibschlüssig erfolgt. Umgekehrt kann ausgehend von einer vollständig geschlossenen Betätigungsposition, in der zwischen dem Eingangsteil und dem Ausgangsteil im Wesentlichen eine vollständige Leistungsübertragung erfolgt, bis hin zu einer vollständig geöffneten Betätigungsposition, in der zwischen dem Eingangsteil und dem Ausgangsteil im Wesentlichen keine Leistungsübertragung erfolgt, betätigungsabhängig eine abnehmende mechanische Leistungsübertragung ermöglicht sein.

Die wenigstens eine Druckplatte und das Gehäuse können miteinander fest verbunden sein. Die wenigstens eine Anpressplatte kann mit dem Gehäuse drehfest und zwischen einer Schließposition und einer Öffnungsposition relativ zu dem Gehäuse axial verlagerbar verbunden sein. Die Reibungskupplungseinrichtung kann wenigstens eine Kupplungsscheibe mit Reibbelägen aufweisen. Die wenigstens eine Kupplungsscheibe kann zwischen der wenigstens einen Druckplatte und der wenigstens einen Anpressplatte zur reibschlüssigen Übertragung einer mechanischen Leistung einklemmbar sein. Das Eingangsteil der Reibungskupplungseinrichtung kann das Gehäuse, die wenigstens eine Druckplatte und die wenigstens eine Anpressplatte aufweisen. Das wenigstens eine Ausgangsteil der Reibungskupplungseinrichtung kann die wenigstens eine Kupplungsscheibe aufweisen.

Die zweite Feder kann sich an der ersten Feder verschleißunabhängig abstützten. Die zweite Feder kann sich an der ersten Feder bereits in einem Neuzustand abstützen. Die zweite Feder kann vorgespannt eingebaut sein. Die Reibbeläge der wenigstens einen Kupplungsscheibe können bei einem Betrieb der Reibungskupplungseinrichtung einem Verschleiß unterliegen. Eine Dicke der Reibbeläge kann sich verschleißbedingt und/oder aufgrund von Setzvorgängen reduzieren. Eine Reduktion der Dicke der Reibbeläge kann einen Betätigungskraftanstieg bewirken. Mithilfe der zweiten Feder kann ein Betätigungskraftanstieg kompensierbar sein. Die erste Feder kann auch als Kupplungsfeder, Betätigungsfeder, Hebelfeder oder Tellerfeder bezeichnet werden. Die zweite Feder kann auch als Servofeder oder Stützfeder bezeichnet werden. Die Federeinrichtung kann die wenigstens eine Anpressplatte in Schließrichtung vorgespannt beaufschlagen.

Die zweite Feder weist einen Ringabschnitt zur Abstützung an dem Gehäuse und Hakenabschnitte zum Halten der ersten Feder auf. Der Ringabschnitt kann einen Innenrand und einen Außenrand aufweisen. Die Hakenabschnitte und der Ringabschnitt können zueinander winklig angeordnet sein. Die Hakenabschnitte und der Ringabschnitt können zueinander jeweils in einem spitzen Winkel angeordnet sein. Die Hakenabschnitte können an dem Ringabschnitt in Umfangsrichtung verteilt angeordnet sein. Die zweite Feder kann sich mit dem Ringabschnitt an dem Gehäuse abstützen. Die zweite Feder kann mit ihrem Ringabschnitt außenseitig an dem Gehäuse angeordnet sein. Der Ringabschnitt kann als aufgestellter Kraftrand ausgebildet sein. Der Kraftrand kann in radialer Richtung aufgestellt sein. Der Ringabschnitt kann wellenförmig ausgebildet sein. Der Ringabschnitt kann in Umfangsrichtung wellenförmig ausgebildet sein. Der Ringabschnitt kann sich mit seinem Außenrand an dem Gehäuse abstützen. Die Hakenabschnitte können an dem Innenrand angeordnet sein. Alternativ kann sich der Ringabschnitt mit seinem Innenrand an dem Gehäuse abstützen. Die Hakenabschnitte können an dem Außenrand angeordnet sein. Das Gehäuse kann Öffnungen für die Hakenabschnitte aufweisen. Die Hakenabschnitte können durch die Öffnungen des Gehäuses hindurch ragen.

Die erste Feder ist mithilfe wenigstens eines Drahtrings verschwenkbar gelagert. An der ersten Feder kann gehäuseseitig ein erster Drahtring angeordnet sein. An der ersten Feder kann anpressplattenseitig ein zweiter Drahtring angeordnet sein. Der erste Drahtring und der zweite Drahtring können zumindest annähernd gleiche Durchmesser aufweisen. Die Hakenabschnitte umgreifen den wenigstens einen Drahtring. Die Hakenabschnitte können den wenigstens einen Drahtring von radial innen nach radial außen umgreifen. Alternativ können die Hakenabschnitte den wenigstens einen Drahtring von radial außen nach radial innen umgreifen.

Die Reibungskupplungseinrichtung kann Zentrierbolzen aufweisen. Die Zentrierbolzen können zum Ausrichten und/oder Zentrieren der ersten Feder, der zweiten Feder, des ersten Drahtrings und/oder des zweiten Drahtrings dienen. Die Zentrierbolzen können an dem Gehäuse angeordnet sein. Die Zentrierbolzen können jeweils zu der wenigstens einen Anpressplatte hin gerichtet sein. Die Zentrierbolzen können jeweils mit dem Gehäuse fest verbunden, beispielsweise vernietet, sein. Die Zentrierbolzen können in Umfangsrichtung verteilt angeordnet sein. Die Reibungskupplungseinrichtung kann beispielsweise drei Zentrierbolzen aufweisen. Die Zentrierbolzen können radial innerhalb des ersten Drahtrings und/oder des zweiten Drahtrings angeordnet sein. Die erste Feder kann Öffnungen für die Zentrierbolzen aufweisen. Die Zentrierbolzen können durch die Öffnungen der ersten Feder hindurch ragen.

Zusammenfassend und mit anderen Worten dargestellt ergibt sich somit durch die Erfindung unter anderem eine gedrückte Kupplung mit Servofeder. Eine gedrückte Kupplungsdruckplatte kann eine Hakenfeder enthalten, die eine Tellerfeder mit einer Vorlast hält. Die Hakenfeder kann die Aufgabe einer Stützfeder bei Kontaktverschleiß an der Tellerfeder oder an Drahtringen übernehmen. Es können Zentrierbolzen zum Zentrieren der Tellerfeder vorhanden sein. Die Hakenfeder kann die Tellerfeder gegen einen Drahtring eines Deckels ziehen. Ein Federeffekt der Hakenfeder kann mit einem aufgestellten Kraftrand oder über eine gewellte Geometrie erzeugt sein. Die Hakenfeder kann gestanzt oder Rolliert und geschweißt hergestellt sein. Zentrierbolzen können die Tellerfeder zentrieren.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Bei der erfindungsgemäßen Reibungskupplungseinrichtung ist ein vergrößerter Bauraum für eine Dämpfereinrichtung bereitgestellt. Radial ist ein vergrößerter Bauraum für eine Dämpfereinrichtung bereitgestellt. Axial ist ein vergrößerter Bauraum für eine Dämpfereinrichtung bereitgestellt. Ein Wirkungsgrad ist erhöht. Ein Kontaktverschleiß an einer Feder und/oder an einem Drahtring ist kompensierbar. Eine Zentrierung ist vereinfacht. Eine Herstellbarkeit ist vereinfacht. Ein Aufwand ist reduziert.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine gedrückte Reibungskupplung mit einer Servofeder mit einem Ringabschnitt und Hakenabschnitten, bei der die Hakenabschnitte radial innenseitig an dem Ringabschnitt angeordnet sind und einen Drahtring von radial innen nach radial außen umgreifen,
- Fig. 2: eine gedrückte Reibungskupplung mit einer Servofeder mit einem Ringabschnitt und Hakenabschnitten, bei der die Hakenabschnitte radial außenseitig an dem Ringabschnitt angeordnet sind und einen Drahtring von radial innen nach radial außen umgreifen,
- Fig. 3: eine gedrückte Reibungskupplung mit einer Servofeder mit einem Ringabschnitt und Hakenabschnitten, bei der die Hakenabschnitte radial außenseitig an dem Ringabschnitt angeordnet sind und einen Drahtring von radial außen nach radial innen umgreifen,
- Fig. 4: eine gedrückte Reibungskupplung mit einer Servofeder mit einem Ringabschnitt und Hakenabschnitten, bei der die Hakenabschnitte radial innenseitig an dem Ringabschnitt angeordnet sind und einen Drahtring von radial außen nach radial innen umgreifen,
- Fig. 5: eine gedrückte Reibungskupplung mit Zentrierbolzen,
- Fig. 6: eine Servofeder mit einem als aufgestellter Kraftrand ausgebildeten Ringabschnitt und Hakenabschnitten und
- Fig. 7: eine Servofeder mit einem wellenförmig ausgebildeten Ringabschnitt und Hakenabschnitten.

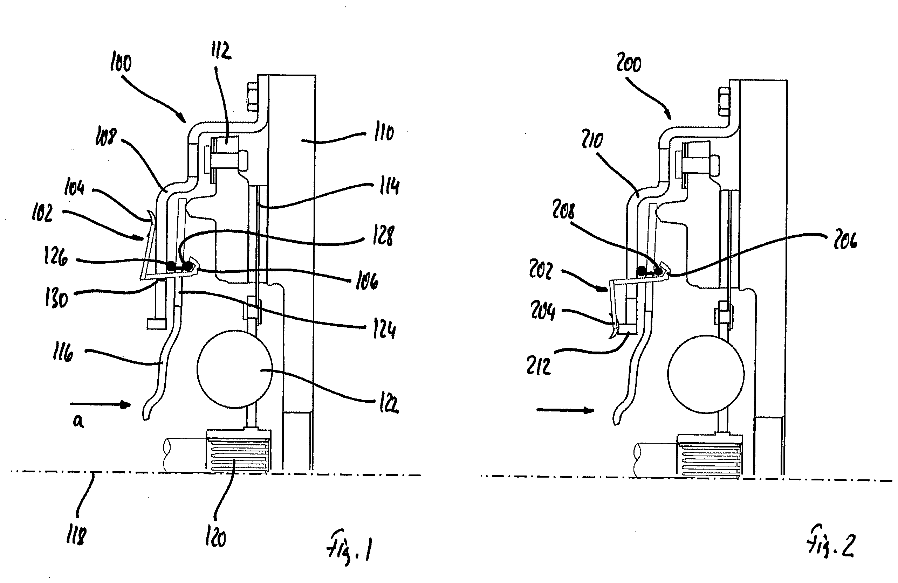

Fig. 1 zeigt eine gedrückte Reibungskupplung 100 mit einer Servofeder 102 mit einem Ringabschnitt 104 und Hakenabschnitten, wie 106, bei der die Hakenabschnitte 106 radial innenseitig an dem Ringabschnitt 104 angeordnet sind und einen Drahtring 128 von radial innen nach radial außen umgreifen.

Die Reibungskupplung 100 ist eine Einscheiben-Trocken-Kupplung. Die Reibungskupplung 100 ist in einem Antriebsstrang eines Kraftfahrzeugs zwischen einer Brennkraftmaschine und einem Getriebe anordenbar. Zwischen der Brennkraftmaschine und der Reibungskupplung 100 kann ein Drehschwingungsdämpfer, insbesondere ein Zweimassenschwungrad, angeordnet sein.

Die Reibungskupplung 100 weist ein Gehäuse 108, eine Druckplatte 110, eine Anpressplatte 112, eine Kupplungsscheibe 114 mit Reibbelägen und eine Federeinrichtung mit einer Tellerfeder 116 und der Servofeder 102 auf. Die Reibungskupplung 100 ist um eine Drehachse 118 drehbar. Die Druckplatte 110 ist mit dem Gehäuse 108 fest verbunden, vorliegend verschraubt. Die Anpressplatte 112 ist mit dem Gehäuse 108 drehfest und axial begrenzt verlagerbar verbunden.

Die Kupplungsscheibe 114 ist axial zwischen der Druckplatte 110 und der Anpressplatte 112 angeordnet. Die Kupplungsscheibe 114 weist radial innenseitig einen Nabenabschnitt 120 zur Verbindung mit einer Eingangswelle des Getriebes auf. Die Kupplungsscheibe 114 weist eine Dämpfereinrichtung 122 auf. Die Dämpfereinrichtung 122 weist eine Dämpferfedereinrichtung auf. Die Dämpferfedereinrichtung weist in Umfangsrichtung der Kupplungsscheibe 114 beaufschlagbare Federn auf. Die Federn der Dämpferfedereinrichtung sind als Schraubendruckfedern ausgebildet. Die Dämpfereinrichtung 122 weist eine Reibeinrichtung auf. Die Dämpferfedereinrichtung und die Reibeinrichtung der Dämpfereinrichtung 122 sind in Parallelschaltung angeordnet. Die Dämpfereinrichtung 122 ist radial zwischen dem Nabenabschnitt 120 und den Reibbelägen der Kupplungsscheibe 114 angeordnet.

Die Anpressplatte 112 ist relativ zu der Druckplatte 110 zwischen einer Schließposition und einer Öffnungsposition verlagerbar. Die Kupplungsscheibe 114 ist zur reibschlüssigen Übertragung einer mechanischen Leistung zwischen der Druckplatte 110 und der Anpressplatte 112 einklemmbar. Das Gehäuse 108, die Druckplatte 110 und die Anpressplatte 112 bilden ein Eingangsteil der Reibungskupplung 100. Die Kupplungsscheibe 114 bildet ein Ausgangsteil der Reibungskupplung 100.

Mithilfe einer Kraft der Tellerfeder 116 ist die Anpressplatte 112 in Richtung der Schließposition beaufschlagt. Damit ist die Reibungskupplung 100 selbsttätig schließend. Die Tellerfeder 116 weist radial außen einen Kraftrand auf. Die Tellerfeder 116 weist Federzungen auf, die sich jeweils ausgehend von dem Kraftrand nach radial innen erstrecken. Die Federzungen wirken als Hebelfedern. In einem Übergangsabschnitt zwischen dem Kraftrand und den Federzungen weist die Tellerfeder 116 zwischen den Federzungen Federfenster, wie 124, auf. Die Tellerfeder 116 stützt sich mit ihrem Kraftrand an der Anpressplatte 112 ab. Die Tellerfeder 116 ist verschwenkbar gelagert. Zur verschwenkbaren Lagerung der Tellerfeder 116 dienen zwei Drahtringe 126, 128. Der Drahtring 126 ist an der Tellerfeder 116 gehäuseseitig angeordnet. Der Drahtring 126 ist an der Tellerfeder 116 anpressplattenseitig angeordnet. Die Drahtringe 126, 128 weisen jeweils gleiche Durchmesser auf. Die Drahtringe 126, 128 sind an der Tellerfeder 116 radial außenseitig an die Federfenster 124 anschließend angeordnet.

Mithilfe einer Kraft der Servofeder 102 ist ein Betätigungskraftanstieg kompensierbar. Der Ringabschnitt 104 der Servofeder 102 ist außenseitig an dem Gehäuse 108 angeordnet. Das Gehäuse 108 weist Öffnungen, wie 130, für die Hakenabschnitte 106 auf. Die Hakenabschnitte 106 ragen in Richtung der Anpressplatte 112 durch die Öffnungen 126 und die Federfenster 124 hindurch. Der Ringabschnitt 104 der Servofeder 102 weist einen radial äußeren Rand auf. Die Servofeder 102 stützt sich mit dem radial äußeren Rand des Ringabschnitts 104 außenseitig an dem Gehäuse 108 ab. Die Hakenabschnitte 106 umgreifen den anpressplattenseitigen Drahtring 128 von radial innen nach radial außen Die Servofeder 102 ist unter Federvorspannung eingebaut. Damit ist die Tellerfeder 116 mit den Drahtringen 126, 128 an dem Gehäuse 108 vorgespannt gehalten.

Zum Öffnen der Reibungskupplung 100 wird die Tellerfeder 116 an den Federzungen in Pfeilrichtung a beaufschlagt. Die Tellerfeder 116 verschwenkt an den Drahtringen 126, 128 und die Anpressplatte 112 verlagert sich in Öffnungsrichtung. Dabei erfolgt eine Betätigung der Tellerfeder 116 in einem vorbestimmten Kennlinienbereich. Wenn sich beispielsweise verschleißbedingt eine Betätigung der Tellerfeder 116 in einem Kennlinienbereich erfolgt, der eine erhöhte Betätigungskraft erfordert, federt oberhalb einer vorbestimmten Betätigungskraft bei einer Betätigung die Servofeder 102 mit, sodass eine Betätigung der Tellerfeder 116 wieder in dem vorbestimmten Kennlinienbereich erfolgt.

Fig. 2 zeigt eine gedrückte Reibungskupplung 200 mit einer Servofeder 202 mit einem Ringabschnitt 204 und Hakenabschnitten, wie 206, bei der die Hakenabschnitte 206 radial außenseitig an dem Ringabschnitt 204 angeordnet sind und einen Drahtring 208 von radial innen nach radial außen umgreifen. Das Gehäuse 210 der Reibungskupplung 200 weist einen radial inneren Rand 212 auf. Der Rand 212 ist vorliegend in axiale Richtung umgeformt. Die Servofeder 202 stützt sich mit ihrem Ringabschnitt 204 an dem Rand 212 ab. Im Übrigen wird ergänzend insbesondere auf Fig. 1 und die zugehörige Beschreibung verwiesen.

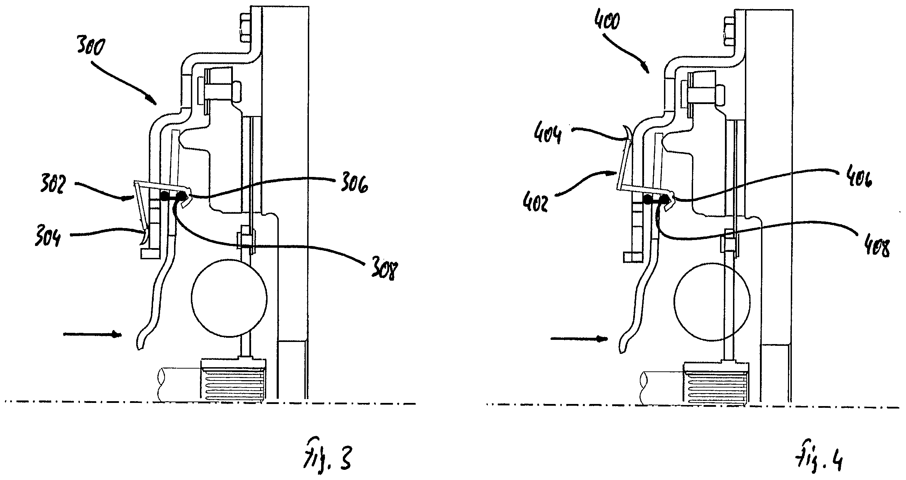

Fig. 3 zeigt eine gedrückte Reibungskupplung 300 mit einer Servofeder 302 mit einem Ringabschnitt 304 und Hakenabschnitten, wie 306, bei der die Hakenabschnitte 306 radial außenseitig an dem Ringabschnitt 304 angeordnet sind und einen Drahtring 308 von radial außen nach radial innen umgreifen. Im Übrigen wird ergänzend insbesondere auf Fig. 1 und die zugehörige Beschreibung verwiesen.

Fig. 4 zeigt eine gedrückte Reibungskupplung 400 mit einer Servofeder 402 mit einem Ringabschnitt 404 und Hakenabschnitten, wie 406, bei der die Hakenabschnitte 406 radial innenseitig an dem Ringabschnitt 404 angeordnet sind und einen Drahtring 408 von radial außen nach radial innen umgreifen. Im Übrigen wird ergänzend insbesondere auf Fig. 1 und die zugehörige Beschreibung verwiesen.

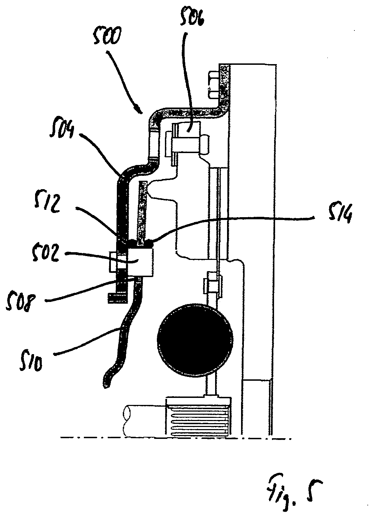

Fig. 5 zeigt eine gedrückte Reibungskupplung 500, wie Reibungskupplung 100 gemäß Fig. 1, Reibungskupplung 200 gemäß Fig. 2, Reibungskupplung 300 gemäß Fig. 3 oder Reibungskupplung 400 gemäß Fig. 4, mit Zentrierbolzen, wie 502. Die Zentrierbolzen 502 sind mit dem Gehäuse 504 vernietet und ragen nach innen in Richtung der Anpressplatte 506. Die Zentrierbolzen 502 ragen durch Federfenster, wie 508 der Tellerfeder 510 hindurch. Die Drahtringe 512, 514 liegen jeweils mit ihrer radialen Innenseite radial außenseitig an den Zentrierbolzen 502 an. Vorliegend sind drei in Umfangsrichtung gleichmäßig verteilt angeordnete Zentrierbolzen 502 vorgesehen. Im Übrigen wird ergänzend insbesondere auf Fig. 1 und die zugehörige Beschreibung verwiesen.

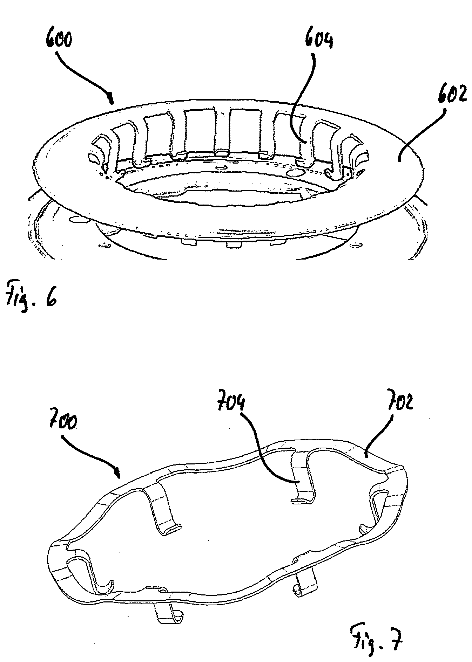

Fig. 6 zeigt eine Servofeder 600, wie Servofeder 402 gemäß Fig. 4, mit einem als aufgestellter Kraftrand ausgebildeten Ringabschnitt 602 und Hakenabschnitten, wie 604. Im Übrigen wird ergänzend insbesondere auf Fig. 1 und die zugehörige Beschreibung verwiesen. Fig. 7 zeigt eine Servofeder 700 mit einem wellenförmig ausgebildeten Ringabschnitt 702 und Hakenabschnitten, wie 704. Der Ringabschnitt 702 ist in Umfangsrichtung der Servofeder 700 gewellt. Im Übrigen wird ergänzend insbesondere auf Fig. 1 und die zugehörige Beschreibung verwiesen.

### Bezugszeichenliste

- 100: Reibungskupplung
- 102: Servofeder
- 104: Ringabschnitt
- 106: Hakenabschnitt
- 108: Gehäuse
- 110: Druckplatte
- 112: Anpressplatte
- 114: Kupplungsscheibe
- 116: Tellerfeder
- 118: Drehachse
- 120: Nabenabschnitt
- 122: Dämpfereinrichtung
- 124: Federfenster
- 126: Drahtring
- 128: Drahtring
- 130: Öffnung
- 200: Reibungskupplung
- 202: Servofeder
- 204: Ringabschnitt
- 206: Hakenabschnitt
- 208: Drahtring
- 210: Gehäuse
- 212: Rand
- 300: Reibungskupplung
- 302: Servofeder
- 304: Ringabschnitt
- 306: Hakenabschnitt
- 308: Drahtring
- 400: Reibungskupplung
- 402: Servofeder
- 404: Ringabschnitt
- 406: Hakenabschnitt
- 408: Drahtring
- 500: Reibungskupplung
- 502: Zentrierbolzen
- 504: Gehäuse
- 506: Anpressplatte
- 508: Federfenster
- 510: Tellerfeder
- 512: Drahtring
- 514: Drahtring
- 600: Servofeder
- 602: Ringabschnitt
- 604: Hakenabschnitt
- 700: Servofeder
- 702: Ringabschnitt
- 704: Hakenabschnitt

## Patentansprüche

1. Reibungskupplungseinrichtung (100, 200, 300, 400, 500) mit einer gedrückten Kupplung für einen Antriebsstrang eines brennkraftmaschinengetriebenen Kraftfahrzeugs, aufweisend eine Drehachse (118), ein Gehäuse (108, 210, 504), wenigstens eine Druckplatte (110), wenigstens eine zu einer Betätigung zwischen einer Schließposition und einer Öffnungsposition relativ zu der Druckplatte (110) axial verlagerbare Anpressplatte (112, 506) und eine Federeinrichtung mit einer ersten Feder (116, 510) zur Beaufschlagung der wenigstens einen Anpressplatte (112, 506) in Schließrichtung und einer zweiten Feder (102, 202, 302, 402, 600, 700) zur Kompensierung eines Betätigungskraftanstiegs, wobei die wenigstens eine Anpressplatte (112, 506) zur Betätigung in Öffnungsrichtung gedrückt ist und sich die zweite Feder (102, 202, 302, 402, 600, 700) einerseits an dem Gehäuse (108, 210, 504) abstützt und andererseits die erste Feder (116, 510) vorgespannt hält, **dadurch gekennzeichnet, dass** die zweite Feder (102, 202, 302, 402, 600, 700) einen Ringabschnitt (104, 204, 304, 404, 602, 702) zur Abstützung an dem Gehäuse (108, 210, 504) und Hakenabschnitte (106, 206, 306, 406, 604, 704) zum Halten der ersten Feder (116, 510) aufweist, und die erste Feder (116, 510) mithilfe wenigstens eines Drahtrings (126, 128, 208, 210, 308, 408, 512, 514) verschwenkbar gelagert ist, und die Hakenabschnitte (106, 206, 306, 406, 604, 704) den wenigstens einen Drahtring (128, 210, 308, 408, 514) umgreifen.

2. Reibungskupplungseinrichtung (100, 200, 300, 400, 500) nach Anspruch 1, **dadurch gekennzeichnet, dass** der Ringabschnitt (104, 204, 304, 404, 602) als aufgestellter Kraftrand ausgebildet ist.

3. Reibungskupplungseinrichtung nach Anspruch 1, **dadurch gekennzeichnet, dass** der Ringabschnitt (702) wellenförmig ausgebildet ist.

4. Reibungskupplungseinrichtung (100, 400) nach einem der Ansprüche 1 bis 3, **dadurch gekennzeichnet, dass** der Ringabschnitt (104, 404, 602, 702) einen Außenrand und einen Innenrand aufweist und die Hakenabschnitte (106, 604, 704) an dem Innenrand angeordnet sind.

5. Reibungskupplungseinrichtung (200, 300) nach einem der Ansprüche 1 bis 4, **dadurch gekennzeichnet, dass** der Ringabschnitt (204, 304) einen Innenrand und einen Außenrand aufweist und die Hakenabschnitte (206, 306) an dem Außenrand angeordnet sind.

6. Reibungskupplungseinrichtung (100, 200) nach einem der Ansprüche 1 bis 5, **dadurch gekennzeichnet, dass** die Hakenabschnitte (106, 206) den wenigstens einen Drahtring (126, 128, 208, 210) von radial innen nach radial außen umgreifen.

7. Reibungskupplungseinrichtung (300, 400) nach einem der Ansprüche 1 bis 5, **dadurch gekennzeichnet, dass** die Hakenabschnitte (306, 406, 604, 704) den wenigstens einen Drahtring (308, 408) von radial außen nach radial innen umgreifen.

8. Reibungskupplungseinrichtung (100, 200, 300, 400, 500) nach einem der Ansprüche 1 bis 7, **dadurch gekennzeichnet, dass** an dem Gehäuse (108, 210, 504) Zentrierbolzen (502) angeordnet sind.

## Claims

1. A friction clutch device (100, 200, 300, 400, 500) having a pressed clutch for a drive train of a motor vehicle driven by an internal combustion engine, having an axis of rotation (118), a housing (108, 210, 504), at least one pressure plate (110), at least one contact plate (112, 506) that can be axially displaced relative to the pressure plate (110) for actuation between a closed position and an open position, and a spring device having a first spring (116, 510) for loading the at least one contact plate (112, 506) in the closing direction and one second spring (102, 202, 302, 402, 600, 700) to compensate for an increase in actuation force, wherein the at least one contact plate (112, 506) is pressed in the opening direction for actuation and the second spring (102, 202, 302, 402, 600, 700) is supported on the one hand on the housing (108, 210, 504) and on the other hand keeps the first spring (116, 510) pretensioned, **characterised in that** the second spring (102, 202, 302, 402, 600, 700) has a ring section (104, 204, 304, 404, 602, 702) for support on the housing (108, 210, 504) and hook sections (106, 206, 306, 406, 604, 704) for holding the first spring (116, 510), and the first spring (116, 510) is pivotably mounted with the aid of at least one wire ring (126, 128, 208, 210, 308, 408, 512, 514), and the hook sections (106, 206, 306, 406, 604, 704) encompass the at least one wire ring (128, 210, 308, 408, 514).

2. The friction clutch device (100, 200, 300, 400, 500) according to claim 1, **characterised in that** the ring section (104, 204, 304, 404, 602) is designed as a raised force edge.

3. The friction clutch device according to claim 1, **characterised in that** the ring section (702) is designed to be wave-shaped.

4. The friction clutch device (100, 400) according to any one of claims 1 to 3, **characterised in that** the ring section (104, 404, 602, 702) has an outer edge and an inner edge, and the hook sections (106, 604, 704) are arranged on the inner edge.

5. The friction clutch device (200, 300) according to any one of claims 1 to 4, **characterised in that** the ring section (204, 304) has an inner edge and an outer edge, and the hook sections (206, 306) are arranged on the outer edge.

6. The friction clutch device (100, 200) according to any one of claims 1 to 5, **characterised in that** the hook sections (106, 206) encompass the at least one wire ring (126, 128, 208, 210) from radially inside to radially outside.

7. The friction clutch device (300, 400) according to any one of claims 1 to 5, **characterised in that** the hook sections (306, 406, 604, 704) encompass the at least one wire ring (308, 408) from radially outside to radially inside.

8. The friction clutch device (100, 200, 300, 400, 500) according to any one of claims 1 to 7, **characterised in that** centring bolts (502) are arranged on the housing (108, 210, 504).

## Revendications

1. Système d'embrayage à friction (100, 200, 300, 400, 500) comprenant un embrayage pressé pour une chaîne cinématique d'un véhicule automobile propulsé par un moteur à combustion interne, présentant un axe de rotation (118), un carter (108, 210, 504), au moins un plateau de pression (110), au moins un plateau de compression (112, 506) disposé pour un actionnement entre une position de fermeture et une position d'ouverture axialement par rapport au plateau de pression (110) et un système à ressort comprenant un premier ressort (116, 510) pour charger l'au moins un plateau de compression (112, 506) dans la direction de fermeture et un second ressort (102, 202, 302, 402, 600, 700) pour compenser une augmentation de la force d'actionnement, l'au moins un plateau de compression (112, 506) étant pressé dans la direction d'ouverture pour l'actionnement et le second ressort (102, 202, 302, 402, 600, 700) s'appuyant d'une part sur le carter (108, 210, 504) et d'autre part maintenant le premier ressort (116, 510) précontraint, **caractérisé en ce que** le second ressort (102, 202, 302, 402, 600, 700) présente une section annulaire (104, 204, 304, 404, 602, 702) pour venir en appui sur le carter (108, 210, 504) et des sections de crochet (106, 206, 306, 406, 604, 704) pour maintenir le premier ressort (116, 510) et le premier ressort (116, 510) est monté pivotant à l'aide d'au moins un anneau en fil métallique (126, 128, 208, 210, 308, 408, 512, 514) et les sections de crochet (106, 206, 306, 406, 604, 704) entourent l'au moins un anneau en fil métallique (128, 210, 308, 408, 514).

2. Système d'embrayage à friction (100, 200, 300, 400, 500) selon la revendication 1, **caractérisé en ce que** la section annulaire (104, 204, 304, 404, 602) est réalisée sous la forme d'un bord de force relevé.

3. Système d'embrayage à friction selon la revendication 1, **caractérisé en ce que** la section annulaire (702) est conçue en forme d'onde.

4. Système d'embrayage à friction (100, 400) selon l'une quelconque des revendications 1 à 3, **caractérisé en ce que** la section annulaire (104, 404, 602, 702) présente un bord extérieur et un bord intérieur et les sections de crochet (106, 604, 704) sont disposées sur le bord intérieur.

5. Système d'embrayage à friction (200, 300) selon l'une quelconque des revendications 1 à 4, **caractérisé en ce que** la section annulaire (204, 304) présente un bord intérieur et un bord extérieur et les sections de crochet (206, 306) sont disposées sur le bord extérieur.

6. Système d'embrayage à friction (100, 200) selon l'une quelconque des revendications 1 à 5, **caractérisé en ce que** les sections de crochet (106, 206) entourent l'au moins un anneau en fil métallique (126, 128, 208, 210) de radialement à l'intérieur à radialement à l'extérieur.

7. Système d'embrayage à friction (300, 400) selon l'une quelconque des revendications 1 à 5, **caractérisé en ce que** les sections de crochet (306, 406, 604, 704) entourent l'au moins un anneau en fil métallique (308, 408) de radialement à l'extérieur à radialement à l'intérieur.

8. Système d'embrayage à friction (100, 200, 300, 400, 500) selon l'une quelconque des revendications 1 à 7, **caractérisé en ce que** des boulons de centrage (502) sont disposés sur le carter (108, 210, 504).
